# EUROPEAN PATENT APPLICATION

(11) **EP 3 125 475 A1**
(43) Date of publication of application: **01.02.2017**
(21) Application number: 15769057.9
(22) Date of filing: 24.03.2015
(51) Int. Cl.: H04L 12/70, H04L 12/46, H04L 12/66

(54) **COMMUNICATION NODE, CONTROL DEVICE, COMMUNICATION SYSTEM, COMMUNICATION METHOD, AND PROGRAM**

(30) Priority: 25.03.2014 JP 2014062674
(71) Applicant: NEC Corporation, Tokyo 108-8001 (JP)
(72) Inventor: WANG, Longjiang, Tokyo 108-8001 (JP); SUZUKI, Yoji, Tokyo 108-8001 (JP); TAKASHIMA, Masanori, Tokyo 108-8001 (JP); TORIGOE, Keisuke, Tokyo 108-8001 (JP)
(74) Representative: Robson, Aidan John
(86) International application number: PCT/JP2015/058852
(87) International publication number: WO 2015/146958

(57) **Abstract**

The invention makes it possible to accommodate communication groups that can potentially exceed 4K, and to implement communication that is not constrained by VLANs to which terminals belong. A communication node is provided with: a group information storage unit that stores correspondence relationships between first communication group information that identifies communication groups in a first network, and second communication group information that identifies communication groups in a second network that can accommodate a larger number of communication groups than the first network; and a packet processing unit that refers to the group information to convert between first communication group information and second communication group information included in received packet(s). Communication is thus realized between terminals in which the first communication group information is different.

## Description

### TECHNICAL FIELD

### [CROSS-REFERENCE TO RELATED APPLICATIONS]

The present application claims priority from Japanese Patent Application No. 2014-062674 (filed on March 25, 2014), the content of which is hereby incorporated in its entirety by reference into this specification. The present invention relates to a communication node, a control apparatus, a communication system, a communication method and a program, and in particular relates to a communication node, a control apparatus, a communication system, a communication method and a program, in a network used by sharing physical network resources by a plurality of communication groups.

### BACKGROUND ART

Patent Literature 1 discloses a frame forwarding method in which it is possible to reduce the size of a MAC learning table with an extended tag VLAN (Virtual Local Area Network) method, and it is possible to improve processing efficiency in determining a forwarding destination in an edge switch. Specifically, with regard to the edge switch described in this literature, when a user frame inputted from a user network is outputted to a core switch in a relay network from an edge switch of the relay network to which the user network is connected, a unique first address in the relay network assigned to the device itself, a unique second address in the relay network assigned to an edge switch connected to the user network that is a destination, a VLAN value assigned to a network in the relay network, a first identifier that is a port identifier of the device itself that receives a frame from the user network, and a second identifier that is a port identifier connected to the user network of the edge switch that is a destination, are appended to a user frame as header information.

Patent Literature 2 and 3 disclose examples that implement wide area networks using the abovementioned extended tag VLAN. Patent Literature 4 discloses a data transmission system that can provide a wide area Ethernet (registered trademark) network without using an extended tag VLAN.

Non-Patent Literature 1 and 2 are examples of a centralized control network related to the present invention. As described in Example 2 on page 5 of Non-Patent Literature 1, with this type of centralized control network, it is possible to logically divide a network using flow identifiers such as VLAN ID or the like.

### CITATION LIST

### PATENT LITERATURE

[PTL 1] Japanese Patent Kokai Publication No. JP2006-25121A
[PTL 2] International Publication No. WO2004/109987
[PTL 3] Japanese Patent Kohyo Publication No. JP2007-532070A
[PTL 4] Japanese Patent Kokai Publication No. JP2009-118127A

### NON PATENT LITERATURE

[NPL 1]
   Nick McKeown and seven other authors, "OpenFlow: Enabling Innovation in Campus Networks", [online], [Search performed on February 21, 2014], Internet <URL: http://archive.openflow.org/documents/openflow-wp-latest.pdf>
[NPL 2]
   "OpenFlow Switch Specification" Version 1.1.0. Implemented (Wire Protocol 0x02), [online], [Searched performed on February 21, 2014], Internet <URL: http://archive.openflow.org/documents/openflow-spec-v1.1.0.pdf>

### SUMMARY OF INVENTION

### TECHNICAL PROBLEM

The following analysis is given according to the present invention. A VLAN header defined by IEEE802.1 has a length of 12 bits, and there is a known problem in that the number of identifiable VLANs is limited to 4k (= 4096).

On the other hand, a user managing a communication network has requirements such as to accommodate a large amount of communication groups, or to freely perform layer 2 (L2) communication without being restricted to VLANs to which terminals belong.

However, in a network in which communication groups are separated according to VLAN, up to 4k communication groups can be accommodated, the same as the abovementioned number of VLANs. In addition to this, a restriction is added that VLANs for terminals belonging to a certain L2 network must not be the same.

It is an object of the present invention to provide a communication node, a control apparatus, a communication system, a communication method and a program, which can contribute to accommodating communication groups potentially exceeding 4k, and to implementing a configuration of communication groups not restricted to VLANs to which terminals belong.

### SOLUTION TO PROBLEM

According to a first aspect, there is provided a communication node provided with a group information storage unit that stores correspondence relationships between first communication group information that identifies communication groups in a first network, and second communication group information that identifies communication groups in a second network that can accommodate a larger number of communication groups than the first network. The communication node is also provided with a packet processing unit that refers to the group information to convert between first communication group information and second communication group information included in received packet(s). The communication node then realizes communication between terminals in which the first communication group information is different.

According to a second aspect, there is provided a control apparatus provided with a group information storage unit that stores correspondence relationships between first communication group information that identifies communication groups in a first network, and second communication group information that identifies communication groups in a second network that can accommodate a larger number of communication groups than the first network. The control apparatus is provided with a control unit that instructs interconversion of first communication group information and second communication group information included in received packet(s), with respect to a communication node to be controlled. The control apparatus then realizes communication between terminals in which the first communication group information is different.

According to a third aspect, there is provided a communication system configured by using the abovementioned communication node or the control apparatus.

According to a fourth aspect, there is provided a communication method, in a communication node provided with a group information storage unit that stores correspondence relationships between first communication group information that identifies communication groups in a first network, and second communication group information that identifies communication groups in a second network that can accommodate a larger number of communication groups than the first network, the method comprising a step of examining whether or not the first communication group information or the second communication group information is included in a received packet, and a step of referring to the group information, in a case where the first communication group information or the second communication group information is included in the received packet, to perform interconversion of the first communication group information and the second communication group information, and the method realizes communication between terminals in which the first communication group information is different. The present method is associated with a particular mechanism, known as a communication node, which is disposed at a boundary between the first network and the second network.

According to a fifth aspect, there is provided a communication method, in a control apparatus provided with a group information storage unit that stores correspondence relationships between first communication group information that identifies communication groups in a first network, and second communication group information that identifies communication groups in a second network that can accommodate a larger number of communication groups than the first network, the method comprising a step of instructing interconversion of the first communication group information and the second communication group information of a received packet that includes the first communication group information or the second communication group information, with respect to a communication node to be controlled, and the method realizes communication between terminals in which the first communication group information is different. The present method is associated with a particular mechanism, known as a control apparatus, which gives an instruction to a communication node disposed at a boundary between the first network and the second network.

According to a sixth aspect of the present invention there is provided a computer program for realizing functionality of the abovementioned communication node or control apparatus. It is to be noted that this program may be recorded on a computer-readable (non-transient) storage medium. That is, the present invention may be embodied as a computer program product.

### ADVANTAGEOUS EFFECTS OF INVENTION

The present invention facilitates accommodating communication groups potentially exceeding 4k as described above, and realizing a configuration of communication groups not restricted to VLANs to which terminals belong.

### BRIEF DESCRIPTION OF DRAWINGS

[Fig. 1]

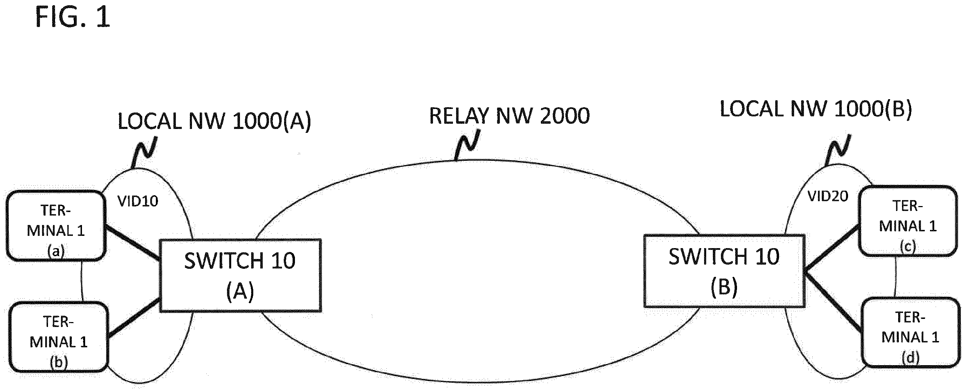

   FIG. 1 is a diagram showing a configuration of a communication system in a first exemplary embodiment of the present invention.
[Fig. 2]

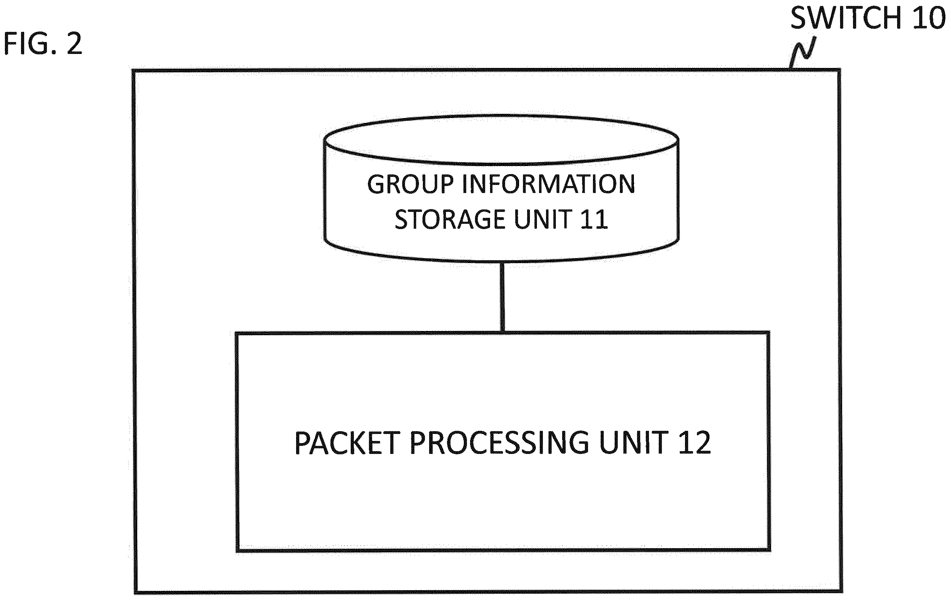

   FIG. 2 is a diagram showing a configuration of a switch (communication node) in the first exemplary embodiment of the invention.
[Fig. 3]

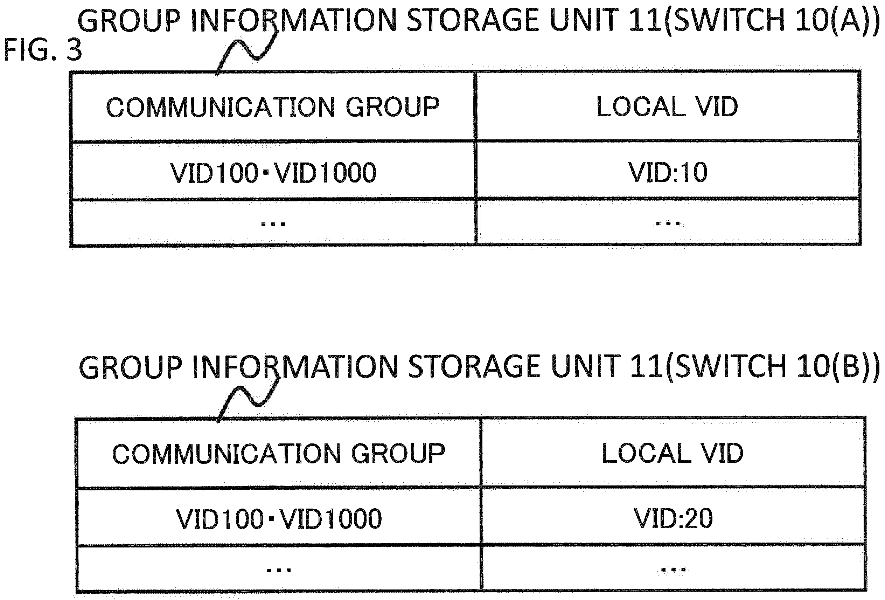

   FIG. 3 is a diagram showing an example of group information held by a switch (communication node) in the first exemplary embodiment of the invention.
[Fig. 4]

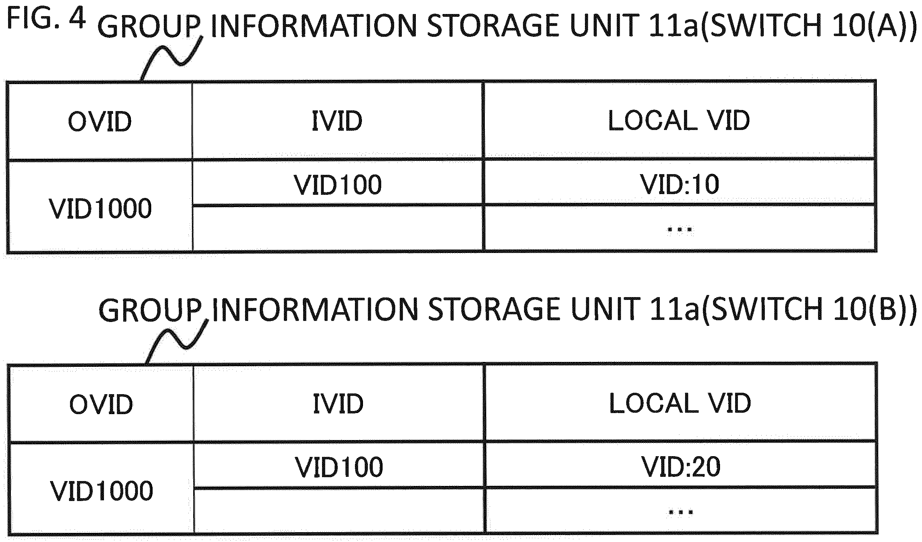

   FIG. 4 is a diagram showing another example of group information held by a switch (communication node) in the first exemplary embodiment of the invention.
[Fig. 5]

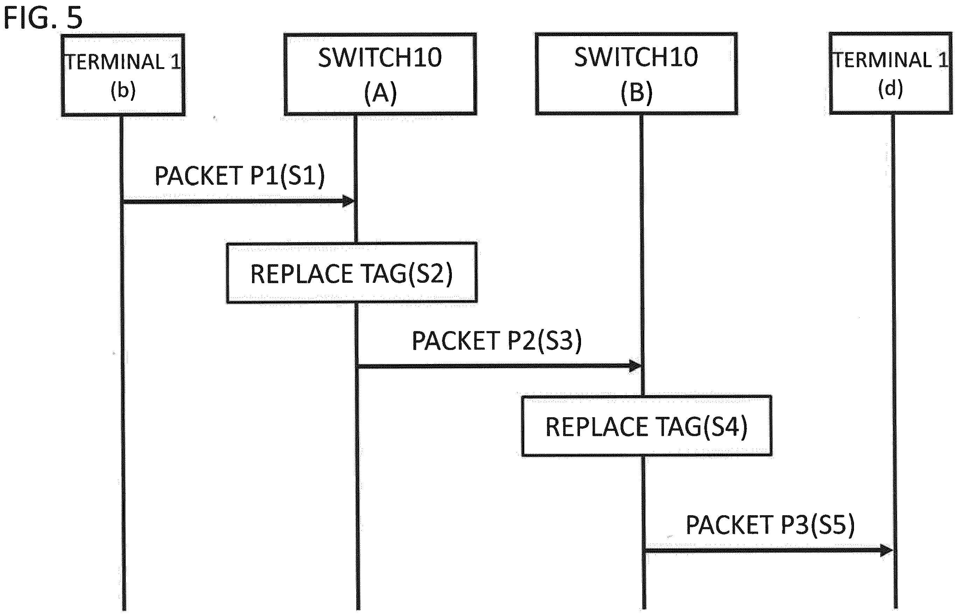

   FIG. 5 is a sequence diagram representing operations of the first exemplary embodiment of the invention.
[Fig. 6]

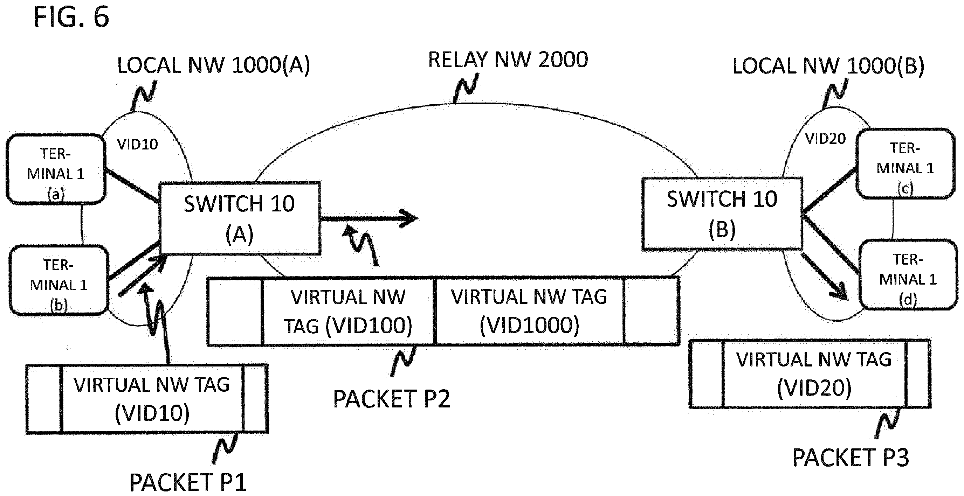

   FIG. 6 is a diagram for describing operations of the first exemplary embodiment of the invention.
[Fig. 7]

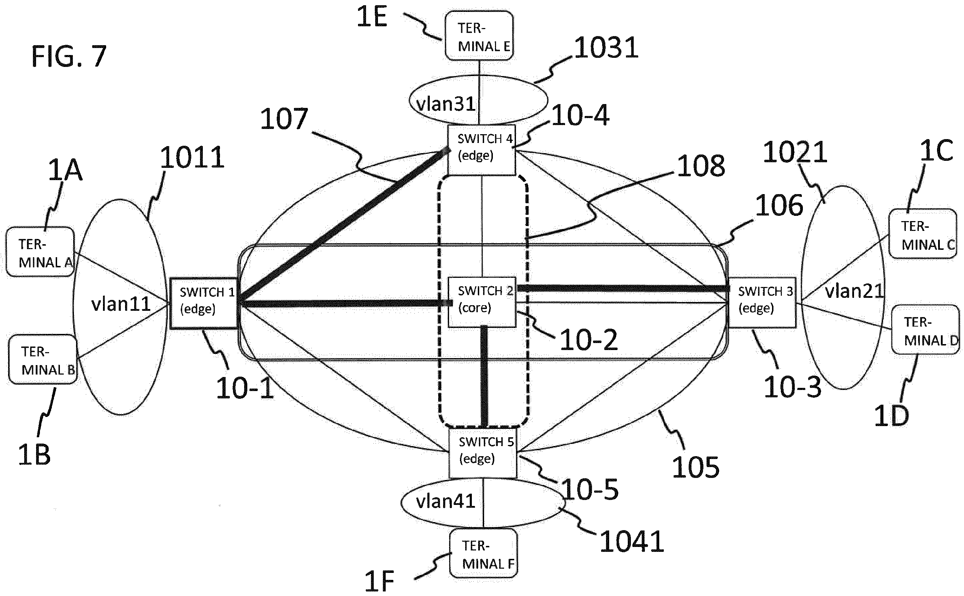

   FIG. 7 is a diagram showing a configuration of a communication system in a second exemplary embodiment of the present invention.
[Fig. 8]

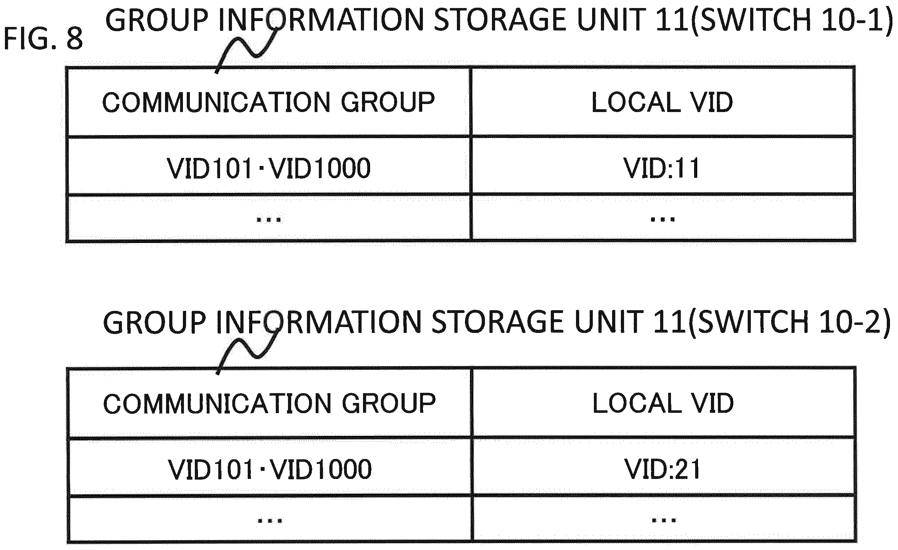

   FIG. 8 is a diagram showing an example of group information held by switches 10-1 and 10-2 in the second exemplary embodiment of the invention.
[Fig. 9]

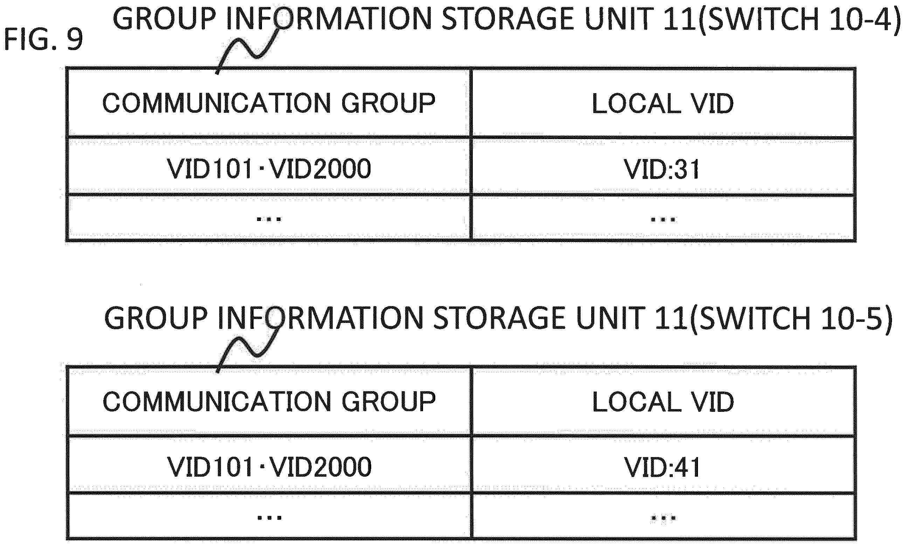

   FIG. 9 is a diagram showing an example of group information held by switches 10-4 and 10-5 in the second exemplary embodiment of the invention.
[Fig. 10]

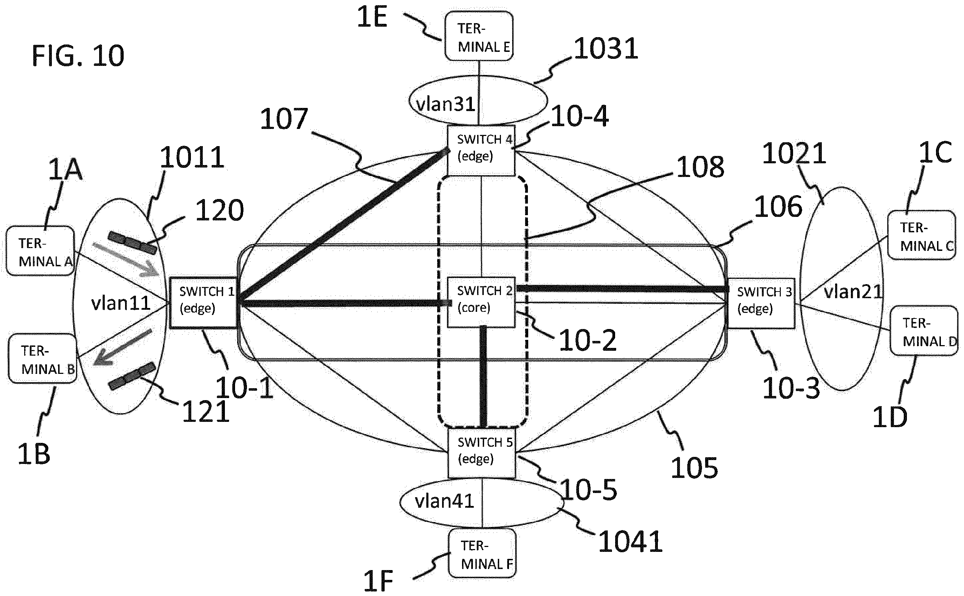

   FIG. 10 is a diagram for describing a packet forwarding operation between terminal A and terminal B in the second exemplary embodiment of the invention.
[Fig. 11]

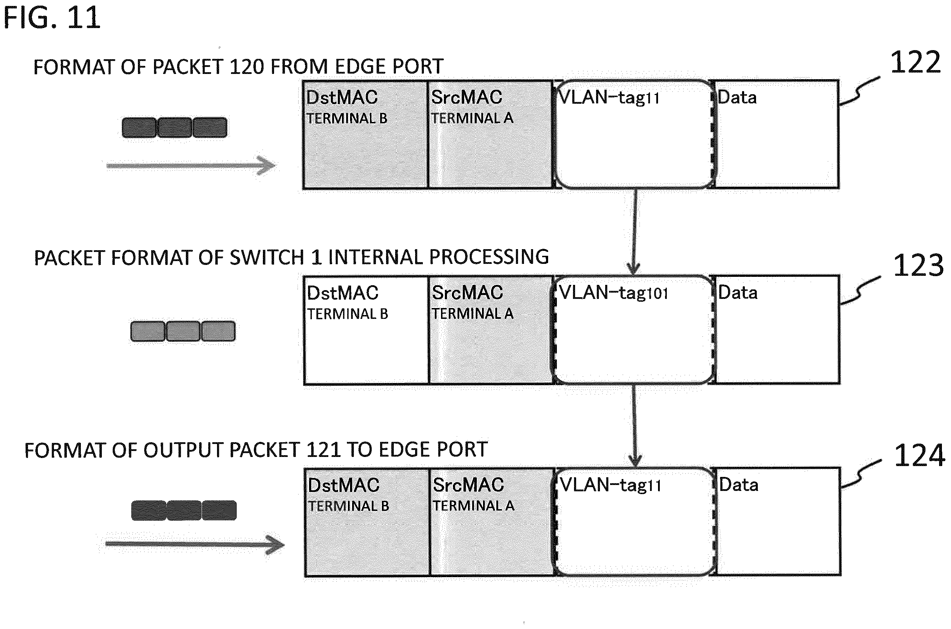

   FIG. 11 is a diagram showing change in packet format accompanying a packet forwarding operation between terminal A and terminal B in the second exemplary embodiment of the invention.
[Fig. 12]

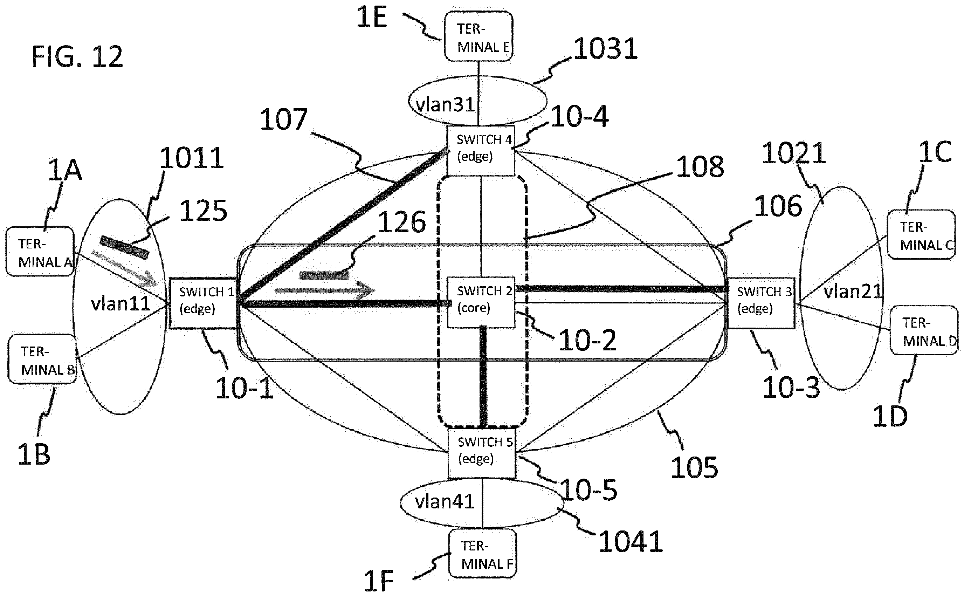

   FIG. 12 is a diagram for describing a packet forwarding operation (passing from terminal A to switch 1 (edge)) between terminal A and terminal C in the second exemplary embodiment of the invention.
[Fig. 13]

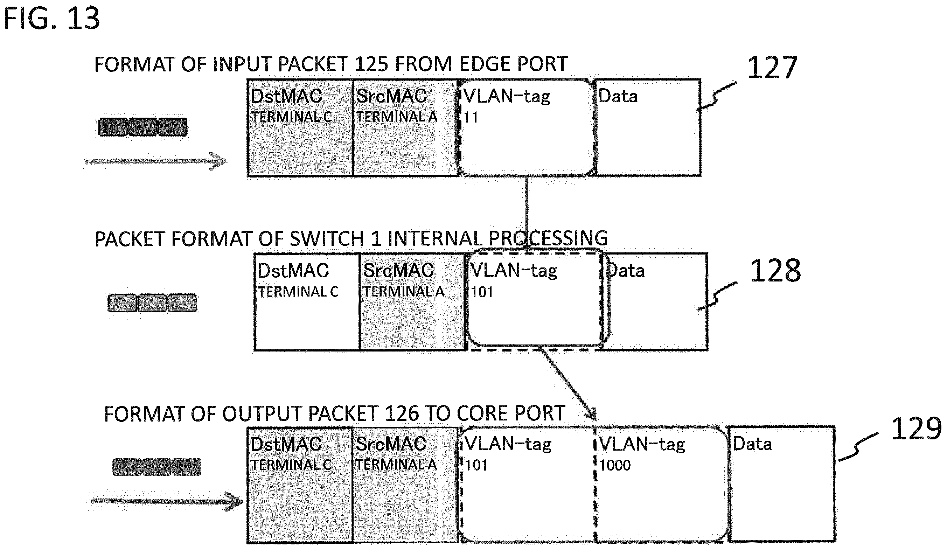

   FIG. 13 is a diagram showing change in packet format accompanying a packet forwarding operation (passing from terminal A to switch 1 (edge)) between terminal A and terminal C in the second exemplary embodiment of the invention.
[Fig. 14]

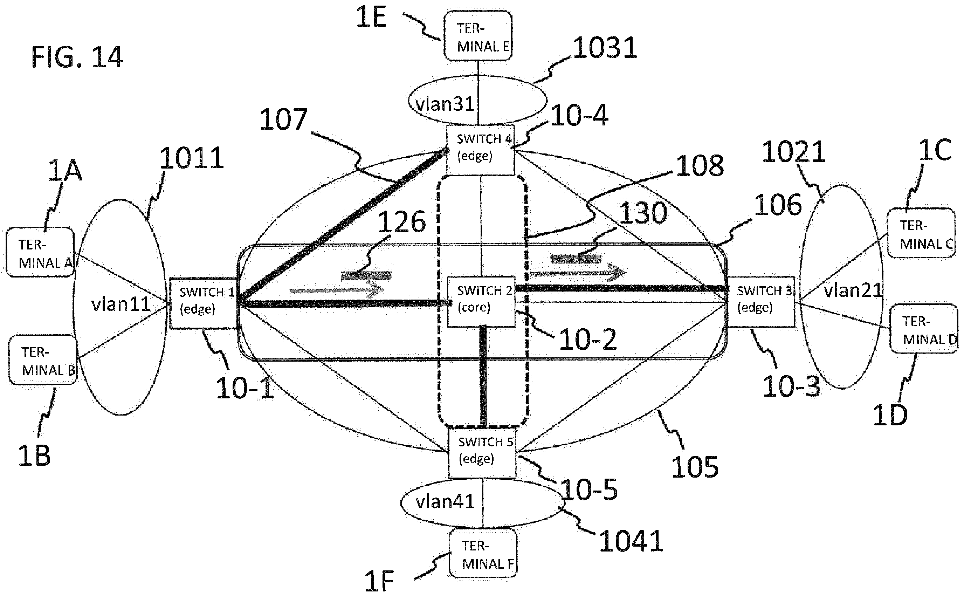

   FIG. 14 is a diagram for describing a packet forwarding operation (passing from switch 1 (edge) to switch 2 (core)) between terminal A and terminal C in the second exemplary embodiment of the invention.
[Fig. 15]

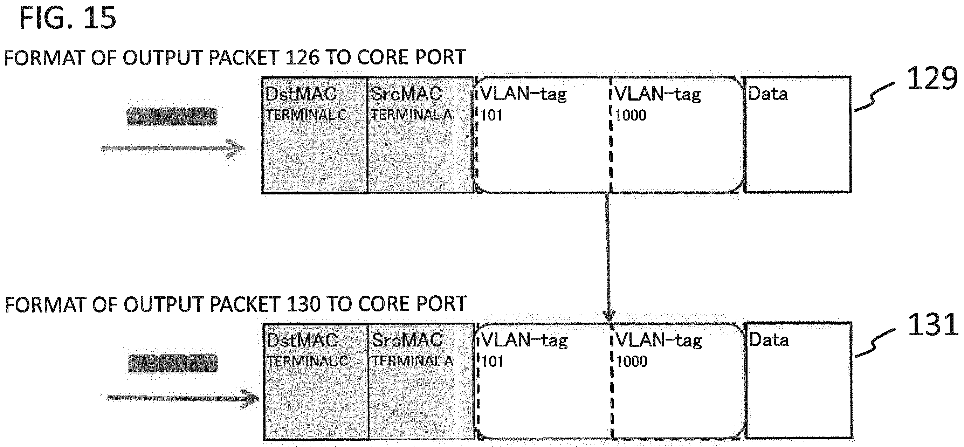

   FIG. 15 is a diagram showing change in packet format accompanying a packet forwarding operation (passing from switch 1 (edge) to switch 2 (core)) between terminal A and terminal C in the second exemplary embodiment of the invention.
[Fig. 16]

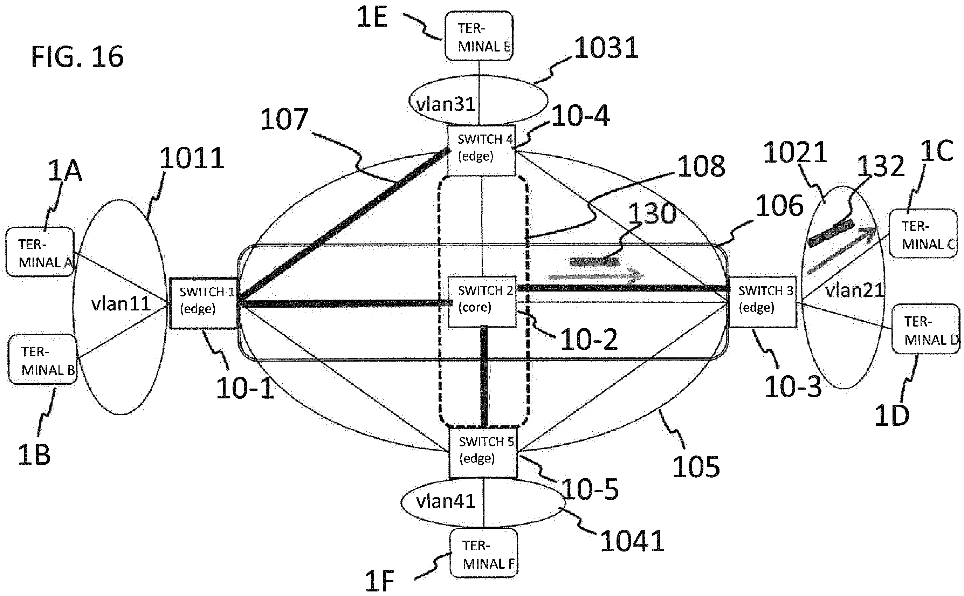

   FIG. 16 is a diagram for describing a packet forwarding operation (switch 2 (core) to terminal C) between terminal A and terminal C in the second exemplary embodiment of the invention.
[Fig. 17]

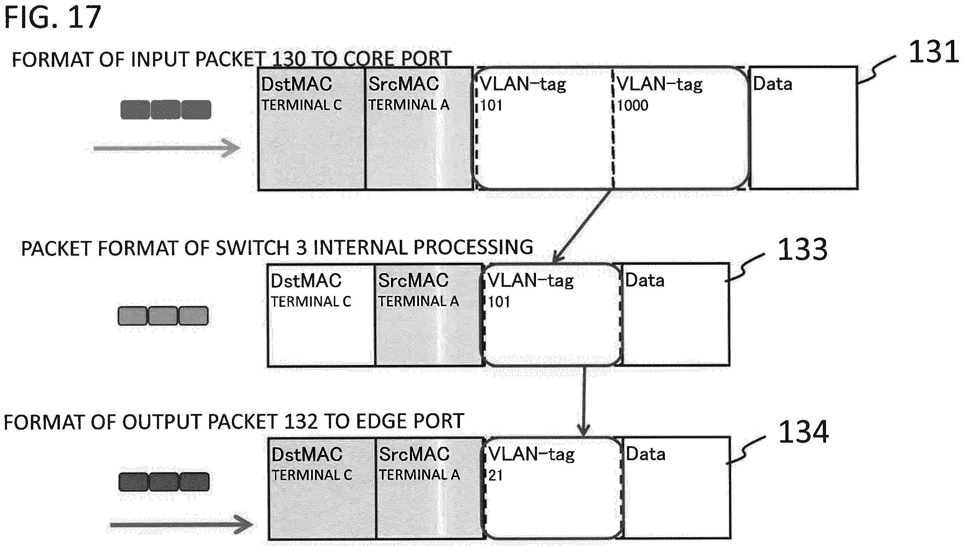

   FIG. 17 is a diagram showing change in packet format accompanying a packet forwarding operation (switch 2 (core) to terminal C) between terminal A and terminal C in the second exemplary embodiment of the invention.
[Fig. 18]

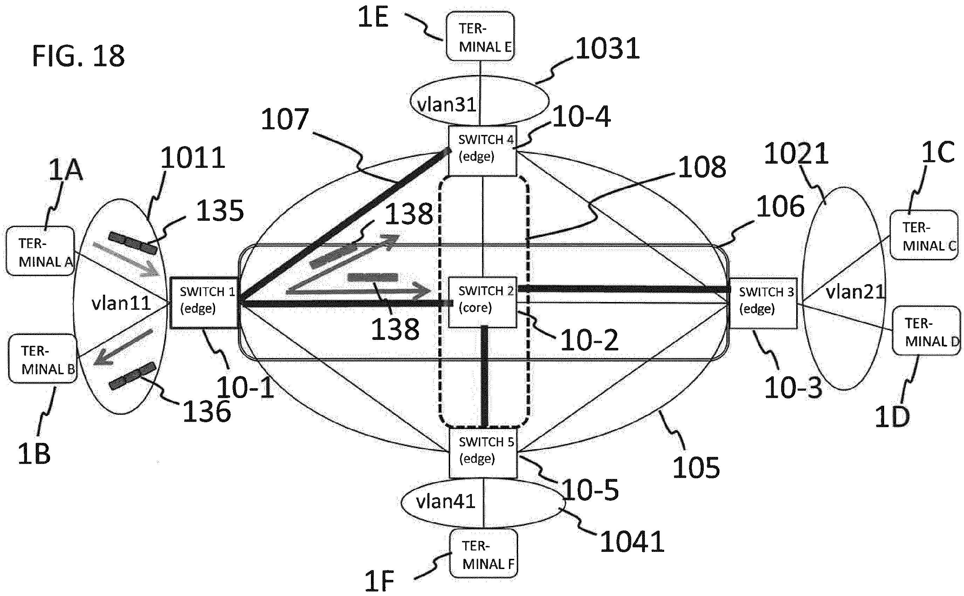

   FIG. 18 is a diagram for describing a flooding operation of switch 1 (edge) in the second exemplary embodiment of the invention.
[Fig. 19]

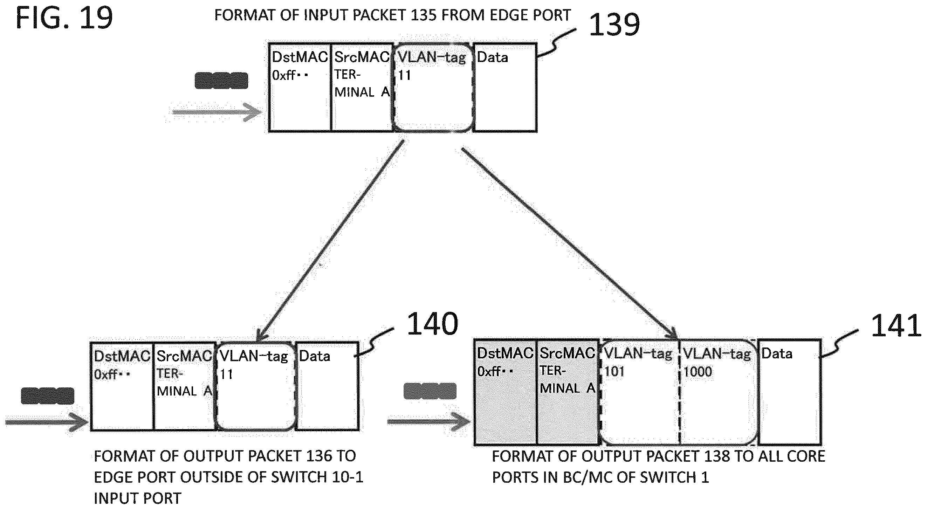

   FIG. 19 is a diagram showing change in packet format accompanying a flooding operation of switch 1 (edge) in the second exemplary embodiment of the invention.
[Fig. 20]

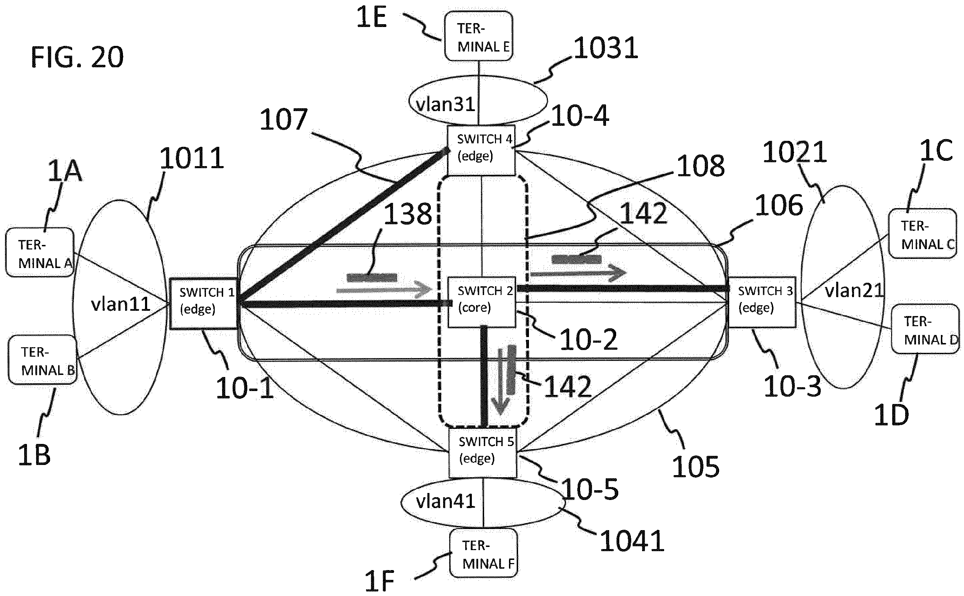

   FIG. 20 is a diagram for describing a flooding operation of switch 2 (core) in the second exemplary embodiment of the invention.
[Fig. 21]

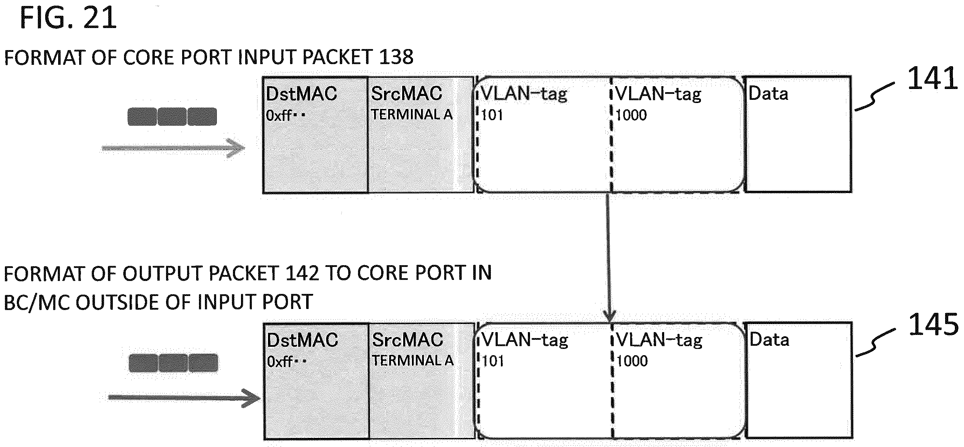

   FIG. 21 is a diagram showing change in packet format accompanying a flooding operation of switch 2 (core) in the second exemplary embodiment of the invention.
[Fig. 22]

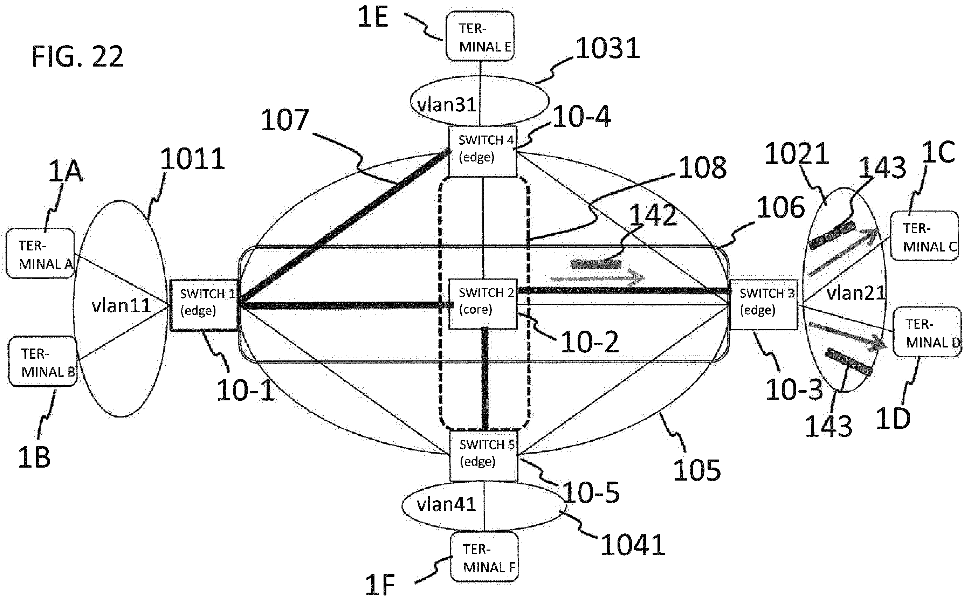

   FIG. 22 is a diagram for describing a flooding operation of switch 3 (edge) in the second exemplary embodiment of the invention.
[Fig. 23]

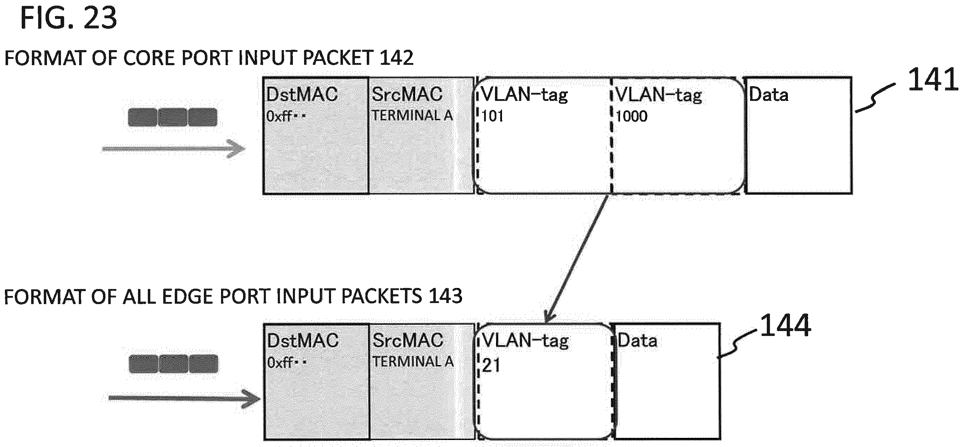

   FIG. 23 is a diagram showing change in packet format accompanying a flooding operation of switch 3 (edge) in the second exemplary embodiment of the invention.
[Fig. 24]

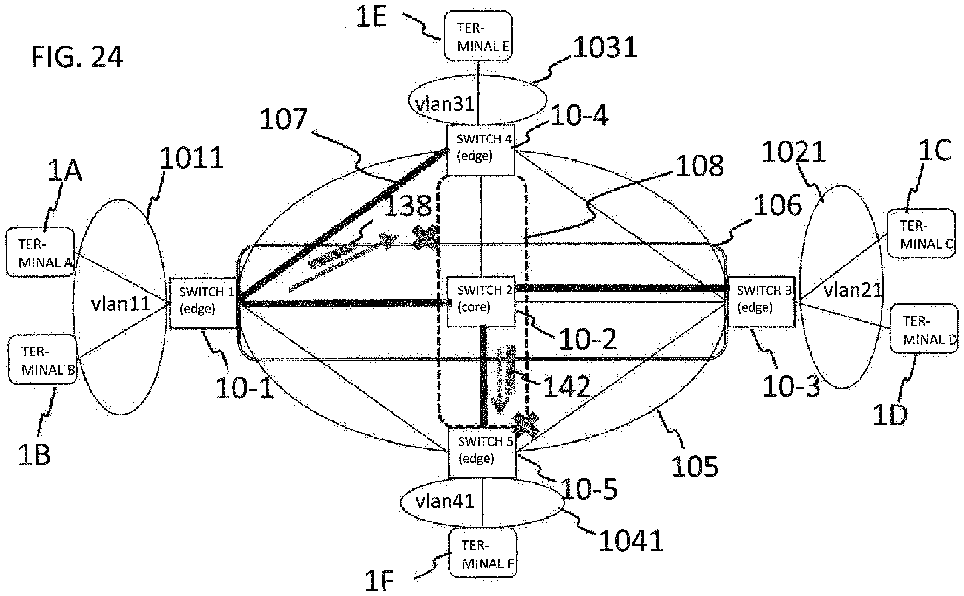

   FIG. 24 is a diagram for describing switch 4 (edge), and a packet dropping operation of switch 4 (edge) in the second exemplary embodiment of the invention.
[Fig. 25]

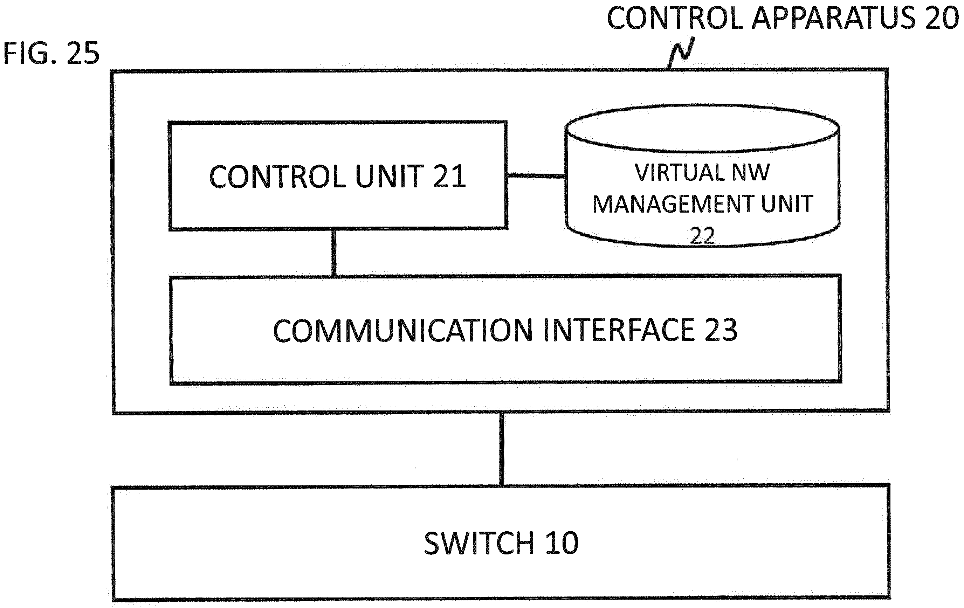

   FIG. 25 is a block diagram showing a configuration of a control apparatus in a third exemplary embodiment of the invention.
[Fig. 26]

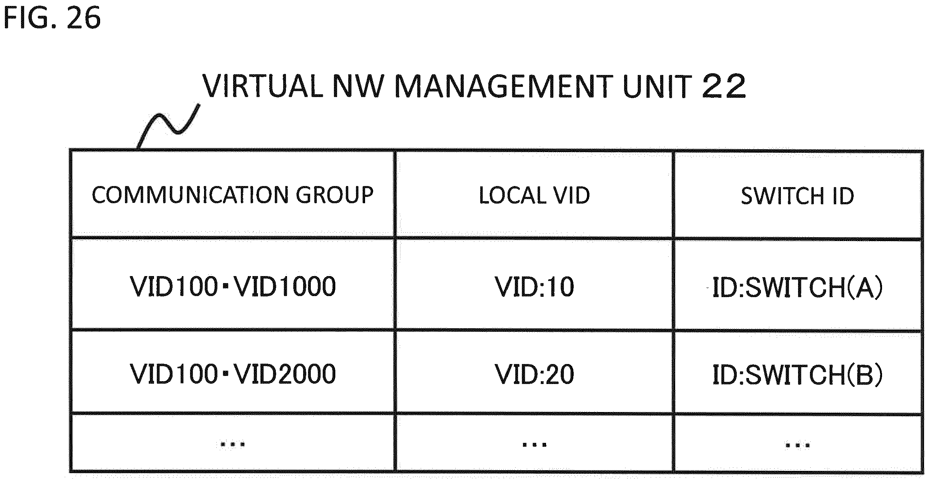

   FIG. 26 is a diagram showing an example of group information held by a virtual NW management unit of the control apparatus in the third exemplary embodiment of the invention.
[Fig. 27]

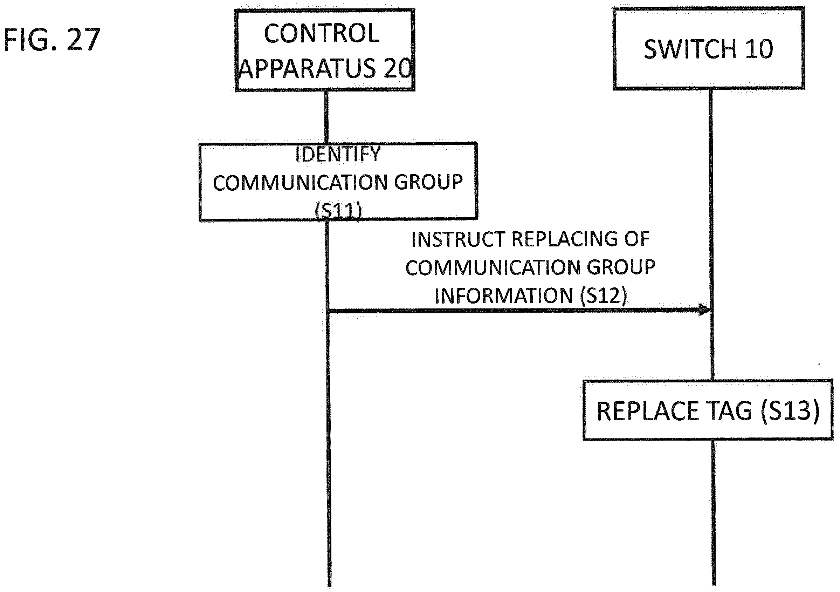

   FIG. 27 is a sequence diagram representing operation of the third exemplary embodiment of the invention.

### DESCRIPTION OF EMBODIMENTS

First, a description is given of an outline of exemplary embodiments of the present invention, making reference to the drawings. It is to be noted that reference numerals in the drawings attached to this outline are added to respective elements for convenience as examples in order to aid understanding, and are not intended to limit the present invention to modes illustrated in the drawings.

The present invention may be implemented, in an exemplary embodiment thereof, by a communication node (see reference numeral 10 in FIG. 1 and FIG. 2) provided with a group information storage unit (see reference numeral 11 in FIG. 2), and a packet processing unit (see reference numeral 12 in FIG. 2).

More specifically, the group information storage unit (see reference numeral 11 in FIG. 2) of the communication node (equivalent to switch 10 in FIG. 1 and FIG. 2) stores correspondence relationships between first communication group information (see local VIDs in FIG. 3) identifying a communication group in a first network (see local NW 1000 in FIG. 1), and second communication group information (see communication groups in FIG. 3) identifying a communication group in a second network that can accommodate a larger number of communication groups than the first network.

The packet processing unit (see reference numeral 12 in FIG. 2) of the communication node (equivalent to switch 10 in FIG. 1 and FIG. 2) refers to the group information to convert between first communication group information and second communication group information included in received packets.

From the above, it is possible to accommodate plural communication groups identified by the second communication group information (see communication groups in FIG. 3), and to make networks with different VLAN IDs (see VIDs in FIG. 1 and FIG. 3) belong to the same group. If a configuration is such that the number of bits of the second communication group information (see communication groups in FIG. 3) is greater than or equal to 13 bits, it is possible to accommodate communication groups exceeding 4k as described above.

### [First Exemplary Embodiment]

Next, a detailed description is given concerning a first exemplary embodiment of the present invention, making reference to the drawings. FIG. 1 is a diagram showing a configuration of a communication system in the first exemplary embodiment of the present invention. FIG. 1 shows a configuration in which 2 local networks 1000(A) and 1000(B) are connected via a relay network 2000. Switches 10(A) and 10(B) are disposed between the local network 1000(A) and the relay network 2000, and the local network 1000(A) and the relay network 2000, respectively. Terminal 1(a) and terminal 1(b) are connected to the local network 1000(A), and terminal 1(c) and terminal 1(d) are connected to the local network 1000(B). It is to be noted that in the following description, when there is no need to distinguish among similar types of device, terminal 1, switch 10, and local network 1000 are described.

The switch 10 can extend a virtual network ID (VID: Virtual Network ID; first communication group information) assigned to terminal 1 in the local NW 1000 (equivalent to a first network). For example, on receiving a packet to which is assigned a VID of the local NW 1000 from terminal 1(a) addressed to terminal 1(c), the switch 10(A) performs an operation of changing to second communication group information that has a larger number of bits than the VID of the local NW 1000, and then forwarding to the relay network 2000 (equivalent to a second network) side. On receiving a packet to which is assigned the second communication group information from terminal 1(c) addressed to terminal 1(a), the switch 10(A) performs an operation of returning to the VID of the local NW 1000 and then forwarding to the terminal 1(a) side.

In changing to the second communication group information it is possible to use, for example, "QinQ" (also called extended tag VLAN, stacked VLAN, provider bridge etc.) standardized in IEEE802.1ad. For example, by assigning VID to each of OVID (Outer VID) and IVID (Inner VID) in a "QinQ", it is possible to extend a virtual network with regard to the relay NW 2000. Clearly it is also possible to replace the second communication group information by using technology outside of "QinQ", and it is sufficient if it is possible to build a virtual network with an ID in which the number of bits has been increased more than the VID used in the local NW 1000. In this way, the relay network 2000 (equivalent to the second network) can accommodate a larger number of communication groups than the first network.

In the example of FIG. 1, the switch 10(A) receives a packet (1) to which is assigned a virtual network tag ("VID 10") corresponding to the VID of terminal 1(b) in the local NW 1000(A), from terminal 1(b). The switch 10(A), for example, assigns a VID different from the VID of the local NW 1000(A) to each of an OVID field and IVID field of the received packet. In the example of FIG. 1, the switch 10 respectively assigns "VID 100" to OVID and "VID 1000" to IVID, and performs transmission to the relay network 2000 as packet P2 (see FIG. 6).

A description is given here concerning a configuration of a switch for realizing functions of the switch 10 described above. FIG. 2 is a diagram showing a configuration of the switch (communication node) in the first exemplary embodiment of the present invention. FIG. 2 shows the switch 10 that is provided with a group information storage unit 11 and a packet processing unit 12.

The group information storage unit 11 holds an entry associating a communication group (equivalent to the abovementioned second group information) to which the switch 10 belongs, and the VID of the local NW 1000 corresponding to the relevant communication group.

FIG. 3 is a diagram showing an example of group information held by the group information storage unit 11 of the switch 10. The upper part of FIG. 3 is an example of an entry held by the switch 10(A) of FIG. 1, and an association is made between the communication group (second communication group information) to which the switch 10(A) belongs, and the local VID (first group information) of FIG. 1. The lower part of FIG. 3 is an example of an entry held by the switch 10(B) of FIG. 1, and an association is made between the communication group (second group information) to which the switch 10(B) belongs, and the local VID (first communication group information) of FIG. 1. Referring to FIG. 1 and FIG. 3, it is understood that different local VIDs are assigned to the switch 10(A) and the switch 10(B), but in the relay NW 2000, they belong to the same group identified by VID100/VID1000.

FIG. 4 is a diagram showing another example of group information held by the group information storage unit 11 of the switch 10. In the example of FIG. 4 entries associating OVID and IVID of "QinQ" and VID of the local NW are shown. Specific content that is set in FIG. 4 is equivalent to the group information of FIG. 3.

Entries of the group information storage unit 11 as above, for example, maybe set by a network operator by a CLI (Command Line Interface) or the like, or may be generated automatically or semi-automatically using attribute information or the like of the switch 10.

Referring to FIG. 2 once again, the packet processing unit 12 of the switch 10 refers to entries of the group information storage unit 11 as described above, and performs an operation of performing interconversion of communication group information attached to packets. For example, on receiving a packet, the packet processing unit 12 searches for an entry having a VID or communication group information attached to the received packet, from the group information storage unit 11. Then, in a case of receiving a packet from the terminal 1 side, for example, the VID (first communication group information) of the packet and the communication group information (second communication group information; for example, OID and IVID combination) of the relevant entry are switched and then forwarded to the relay network 2000. In a case of receiving a packet from the relay network 2000 side, the packet processing unit 12 replaces the communication group information of the packet with the VID (first communication group information) of the relevant entry, to be then forwarded to the terminal 1 side.

Next, a detailed description is given concerning operations of the present exemplary embodiment, making reference to the drawings. FIG. 5 is a sequence diagram representing operation of the first exemplary embodiment of the present invention. Below, referring to FIG. 5, a description is given of operations of the present exemplary embodiment making reference to FIG. 6 as appropriate.

In the following description, as shown in FIG. 1, switch 10(A) and switch 10(B) are taken as belonging to the same communication group. Switch 10(A) is connected to the local network 1000(A) to which VID 10 is assigned, and switch 10(B) is connected to the local network 1000(B) to which VID 20 is assigned.

Here terminal 1(b) of FIG. 1 transmits packet P1 addressed to terminal (d). First, on receiving packet P1 (step S1), switch 10(A) searches for a relevant entry in the group information storage unit 11, based on a terminal 1(b) VID tag (VID 10 here) that is set by packet P1.

As a result of the search, the entry shown in the upper part of FIG. 3 is retrieved. Switch 10(A) generates packet P2 where the VID tag of packet P1 is replaced by a tag (for example, OVID, IVID combination) having information of a communication group field of FIG. 3 (step S2, see FIG. 6). In addition, switch 10(A) forwards the packet P2 to switch 10(B) in the relay network 2000 (step S3).

Switch 10(B), which has received the packet P2, searches for a relevant entry in the group information storage unit 11, based on a tag holding information of the communication group field set in packet P2. As a result of the search, the entry shown in the lower part of FIG. 3 is retrieved. Switch 10(B) generates packet P3 where the communication group tag of packet P2 is replaced by a VID tag (in the example of FIG. 3, VID 20) of FIG. 3 (step S4, see FIG. 6). In addition, switch 10(B) forwards the packet P3 to terminal 1(d) (step S5).

As described above, since the communication group tag of the received packet is replaced by the VID tag of the local NW 1000, switch 10(B) can receive a packet transmitted from the local NW 1000 with a different VID. The reason for this is that the VID of a packet received by switch 10 is converted temporarily to the VID of the local NW 1000, and an appropriate VID is reset.

As described above, according to the present exemplary embodiment, communication between local NWs 1000 with different VIDs is realized. In addition, in the present exemplary embodiment, since use is made of communication group information having a larger number of bits than the VID, a rapid increase is realized in the number of groups that can be accommodated by the relay network 2000.

### [Second Exemplary Embodiment]

Next, a description is given of a second exemplary embodiment in which an edge switch and a core switch are disposed in a relay network, and a plurality of communication groups share these switches to perform group communication. It is to be noted that since the configuration of the switches is the same as the first exemplary embodiment, the description below is centered on points of difference between them.

FIG. 7 is a diagram showing a configuration of a communication system in the second exemplary embodiment of the present invention. Referring to FIG. 7, the relay network 105, in which switches 10-1 to 10-5 are disposed, is shown. Among switches 10-1 to 10-5, switches 10-1, 10-3, 10-4 and 10-5 are each edge switches disposed at boundaries with local VLANs 1011 to 1041. Switch 10-2 is a core switch to which none of the local VLANs are connected.

VIDs 11 to 41 are respectively assigned to local VLANs 1011 to 1041. Terminals 1A and 1B are connected via VLAN 1011 to switch 10-1, and terminals 1C and 1 D are connected via VLAN 1021 to switch 10-3. Similarly, terminal 1 E is connected via VLAN 1031 to switch 10-4, and terminal IF is connected via VLAN 1041 to switch 10-5.

In the present exemplary embodiment, switch 10-1 and switch 10-3 belong to the same communication group 106 by a relay network 105, and OVID=101, IVID=1000 are assigned. Similarly, switch 10-4 and switch 10-5 belong to the same communication group 108 by the relay network 105, and OVID=101, IVID=2000 are assigned. In this way, since OVID and IVID combinations of communication group 106 and communication group 108 are different, identification in the relay network 105 is possible.

Paths shown by solid lines 107 in FIG. 7 are calculated as multicast and broadcast paths in the relay network 105.

Here, a description is given setting out terms used in the present exemplary embodiment.
(1) Local VLAN:
   Definition: VLAN used when transmitting a packet between terminal and switch. VLANs 1011 to 1041, which are identified by "vlan11 (VID=11)", "vlan21 (VID=21)", "vlan31 (VID=31)", "vlan41 (VID=41)" in FIG. 7, correspond to this.
(2) Relay VLAN:
   Definition: VLAN representing L2 relay plane in a network. "VLAN 101", which is set as an OVID in communication groups 106 and 108 in FIG. 7, corresponds to this.
(3) Group VLAN:
   Definition: VLAN representing group number in the same L2 relay plane in a network. "VLAN 1000" and "VLAN 2000", which are set as IVID in communication groups 106 and 108 in FIG. 7, correspond to this.
(4) Communication Group
   Definition: Switch group, communication group, in which mutual L2 relay communication is possible in a network, are represented by a relay VLAN and group VLAN combination. In the present exemplary embodiment, communication group information of the communication group 106 is represented by VLAN 101 / VLAN 1000. Similarly, communication group information of the communication group 108 is represented by VLAN 101 / VLAN 2000. This is equivalent to a combination (OVID / IVID) of QinQ.
(5) BC/MC Tree (solid lines in FIG. 7)
   Definition: Broadcast/multicast distribution (forwarding/ distribution/ delivery) tree for flooding without leaking in all switches in a network. Below, a "BC/MC tree" is described. In the present exemplary embodiment, this corresponds to distribution route (solid line) of "switch 1 - switch 4", "switch 1 - switch 2", and "switch 2 - switch 5" in FIG. 7.

Here, ports of switches 10-1 to switch 10-5 are classified into edge ports and core port for convenience. A port connected to a terminal is called an edge port. A port connected to another switch is called a core port.

In the present exemplary embodiment there are 2 communication groups. Switches 10-1, 10-2 and 10-3 belong to communication group 106. OVID=101 / IVID=1000 are set as communication group information of communication group 106. Accordingly, an entry as shown in FIG. 8 is set in the group information storage unit 11 of switches 10-1 and 10-3.

Switches 10-2, 10-4 and 10-5 belong to communication group 108. OVID=101 / IVID=2000 are set as communication group information of communication group 108. Accordingly, an entry as shown in FIG. 9 is set in the group information storage unit 11 of switches 10-4 and 10-5. Note that switch 10-2 belongs to 2 communication groups.

Next, a description is given of basic operations of a switch in the present exemplary embodiment. On receiving a packet from an edge port, edge switches (10-1, 10-3, 10-4, 10-5) perform a VLAN-related operation as below.

1: On receiving a packet from a terminal, a local VLAN of the received packet is converted to a relay VLAN (OVID).
2: Based on the converted packet, a routing table or flow table of Non-Patent Literature 1 or 2 is searched, and an output port is determined.
3: (1) When the output port is an edge port, relay VLAN to local VLAN conversion and output is performed. (2) When the output port is a core port, a group VLAN (IVID) is further added to the packet and output is performed.

On receiving a packet from a core port, an edge switch performs a VLAN-related operation as below.

1: On receiving a packet from a network, a group VLAN is excluded in a case of the same communication group.
2: Based on a converted packet, a routing table or flow table of Non-Patent Literature 1 or 2 is searched, and an output port is determined.
3: (1) When the output port is an edge port, relay VLAN to local VLAN conversion and output is performed. (2) When the output port is a core port, a group VLAN (IVID) is further added to the packet and output is performed.

Note that even if a packet with the above relay VLAN (OVID) or group VLAN (IVID) attached is received, the core switch does not particularly perform a VLAN-related operation.

Based on the above premise, a description is given concerning packet processing performed by a switch on a path when communication is performed among subordinate terminals. First, a description is given concerning packet processing performed by a switch on a path when communication is performed among terminals subordinate to switches 10-1, 10-3 belonging to communication group 106.

### [Communication within Local VLAN]

FIG. 10 is a diagram for describing a packet forwarding operation between terminal A and terminal B in the local VLAN 1011. The packet 120 is a packet transmitted from terminal A addressed to terminal B. Reference numeral 122 in FIG. 11 indicates the format of a packet 120. In the example of FIG. 11, it is understood that VLAN-tag11 indicating the VID of the local VLAN 1011 is attached.

The switch 10-1 that receives the packet 120 determines that the address is terminal B, and forwards packet 121 to terminal B. Reference numeral 123 in FIG. 11 indicates a packet format for internal processing of switch 10-1, and reference numeral 124 in FIG. 11 indicates the format of packet 121. As shown in FIG. 11, after temporarily attaching VLAN-tag 101 that holds relay VLAN (OVID=101), since the output destination is an edge port, switch 10-1 performs an operation of changing relay VLAN (OVID=101) to VLAN-tag 11 indicating the VID of the local VLAN 1011.

### [Communication within the same group]

FIG. 12 is a diagram for describing a packet forwarding operation at an edge switch on an entrance side between terminal A and terminal C that have different local VLANs but belong to the same communication group. Packet 125 in FIG. 12 is a packet transmitted from terminal A addressed to terminal C. Reference numeral 127 in FIG. 13 indicates the format of the packet 125. In the example of FIG. 13, it is understood that VLAN-tag11, indicating the VID of the local VLAN 1011, is attached.

Switch 10-1 that receives packet 125 determines that the address is terminal C, and forwards packet 126 to switch 10-2. Reference numeral 128 in FIG. 13 indicates a packet format for internal processing of switch 10-1, and reference numeral 129 in FIG. 13 indicates the format of packet 126. In the example of FIG. 13, it is understood that after attaching VLAN-tag 101 that holds relay VLAN (OVID=101), additionally, based on information of the group information storage unit 11 (see FIG. 8), a VLAN-tag 1000 corresponding to IVID=1000 is added.

Switch 10-2 that receives packet 126 determines that the address is terminal C, as shown in FIG. 14, and forwards packet 130 to switch 10-3. Reference numeral 131 in the lower part of FIG. 15 indicates the format of a packet 130. In the example of FIG. 15, it is understood that switch 10-2 forwards packet 126 as it is, as packet 130.

Switch 10-3 that receives packet 130 determines that the address is terminal C, as shown in FIG. 16, and forwards packet 132 to terminal 1C. Reference numeral 133 in FIG. 17 indicates packet format in internal processing of switch 10-3, and reference numeral 134 in FIG. 17 indicates the format of packet 132. In the example of FIG. 17, first, VLAN-tag 1000 indicating group VLAN is excluded from packet 130 holding VLAN-tag 101, VLAN-tag 1000. Thereafter, it is understood that since the output destination is an edge port, additionally, based on information of the group information storage unit 11 (see FIG. 8), VLAN-tag 101 is replaced by VLAN-tag 21 corresponding to local VID=21.

### [Flooding]

FIG. 18 is a diagram for describing operation of an entry edge switch 10-1 when packet flooding is performed. Packet 135 is a packet for flooding transmitted from terminal A. Reference numeral 139 in FIG. 19 indicates the format of packet 135. In the example of FIG. 19, it is understood that a broadcast address is set to an address in DstMAC, and VLAN-tag 11 indicating a VID of the local VLAN 1011 is attached.

Switch 10-1 that receives packet 135 determines that the address is a broadcast address, and performs flooding of packets 136 and 138, following the BC/MC path. Reference numeral 140 in FIG. 19 indicates the format of packet 136 outputted from an edge port outside of an input port of switch 10-1, and reference numeral 141 in FIG. 19 indicates the format of packet 138 outputted from all core ports on the BC/MC path of switch 10-1. In the example of FIG. 19, it is understood that, similar to packet 135, VLAN-tag 11 is set for packet 136 (that is, since the output port is an edge port, VLAN-tag 11 is again added). It is understood that based on information of the group information storage unit 11 (see FIG. 8), 2 VLAN tags, VLAN-tag 101 corresponding to OVID=101 and VLAN-tag 1000 corresponding to IVID 1000 are added to packet 138.

Switch 10-2 that receives packet 138 outputs packet 142 from all core ports on the BC/MC path, as shown in FIG. 20. Reference numeral 145 in the lower part of FIG. 21 indicates the format of packet 142. In the example of FIG. 21, it is understood that switch 10-2 forwards packet 138 as it is, as packet 142.

Switch 10-3 that receives packet 142 determines that the address is a broadcast address, as shown in FIG. 22, and performs flooding of packet 143 to its own edge port. Reference numeral 144 in the lower part of FIG. 23 indicates the format of packet 143. In the example of FIG. 23, it is understood that, based on information of the group information storage unit 11 (see FIG. 8), VLAN-tag 101 and VLAN-tag 1000 are excluded, and a replacement is made to VLAN-tag 21 corresponding to local VID=21.

It is to be noted that in the case in flooding, as for packet 138 directed from switch 10-1 to switch 10-4 in FIG. 18, and packet 142 directed from switch 10-2 to switch 10-5 in FIG. 20, the packet on which flooding was performed is forwarded to a switch belonging to a different communication group. However, when these packets are received, switch 10-4 and switch 10-5 make a search as to whether or not there is a relevant entry in the group information storage unit 11. However, as shown in FIG. 9, since there is no entry corresponding to VLAN-tag 101 and VLAN-tag 1000 set in these packets, switch10-4 and switch 10-5 determine that the packets do not belong to the communication group, as shown in FIG. 24, and these packets are dropped. It is to be noted that in the example of FIG. 24, switch 10-4 and switch 10-5 perform only the packet dropping operation, but additionally, in a case of a core port on a BC/MC path, they perform an operation of flooding from these core ports.

The packet dropping operation is similarly applied, not only on receipt of BC/MC packets, but also when a unicast packet is delivered. That is, in a case of receiving a unicast packet not being addressed to the same device, switch 10 performs an operation of packet dropping.

### [Third Exemplary Embodiment]

Next, a description is given concerning a third exemplary embodiment in which an instruction is given relating to replacing communication group information on a control apparatus side. It is to be noted that since the configuration of switches (communication nodes) and the format of packets are the same as the first and second exemplary embodiments, the description below is centered on points of difference between them.

FIG. 25 is a block diagram showing a configuration of a control apparatus in the present exemplary embodiment. FIG. 25 shows a configuration provided with a control unit 21, a virtual NW management unit 22, and a communication interface 23.

The control apparatus 20 can communicate with a switch 10, via the communication interface 23. In a case where the switch 10 is an OpenFlow switch of Non-Patent Literature 1 or 2, it is also possible to use an OpenFlow controller of Non-Patent Literature 1 and 2.

The virtual NW management unit 22 holds entries associating a communication group (equivalent to second communication group information) to which the switch 10 belongs, and a VID (equivalent to first communication group information) of a local NW 1000 corresponding to the relevant communication group. FIG. 26 is an example of an entry held by the virtual NW management unit 22. A point of difference from the entries shown in FIG. 3 and FIG. 4 is that a field describing switch ID to be controlled is added. It is to be noted that in the example of FIG. 26, by providing switch ID field, the implementation is by a single table, but a table may also be provided for each switch. An entry of this type of virtual NW management unit 22 may be set by a network operator, or may be set by an external device such as an operation management device.

The control unit 21 refers to the abovementioned virtual NW management unit 22 and identifies a communication group corresponding to the switch 10. In addition, the control unit 21 gives notification to the switch 10 of, for example, a communication group (equivalent to second communication group information) to which the relevant switch belongs, and a VID (equivalent to first communication group information) of a local NW 1000 corresponding to the relevant communication group. It is to be noted that in the virtual NW management unit 22, in a case of holding information indicating correspondence relationships between a combination of OVID and IVID, and a VID of a local NW, as shown in FIG. 4, notification of these matters is given.

Based on information (instruction to replace communication group information) notified by the control unit 21 of the control apparatus 20 having the abovementioned functions, switch 10 of the present exemplary embodiment performs interconversion of communication group (equivalent to second communication group information) and VID (equivalent to first communication group information) of a local NW 1000 corresponding to the relevant communication group.

Next, a detailed description is given concerning operations of the present exemplary embodiment, making reference to the drawings. FIG. 27 is a sequence diagram representing operations of the third exemplary embodiment of the present invention. Below, referring to FIG. 27, a description is given of operations of the present exemplary embodiment making reference to FIG. 6 as appropriate.

In the present exemplary embodiment, as shown in FIG. 6, switch 10(A) and switch 10(B) are taken as belonging to the same communication group. Switch 10(A) is connected to the local network 1000(A) to which VID 10 is assigned, and switch 10(B) is connected to the local network 1000(B) to which VID 20 is assigned.

Referring to FIG. 27, first, the control apparatus 20 selects the switch 10 which is to be controlled, and identifies a communication group (second communication group information) to which the relevant switch 10 belongs (step S11).

Next, the control apparatus 20 transmits an instruction to replace communication group information, to switch 10 (step S12). It is to be noted that the instruction to replace the communication group information may have the form of entry addition, modification or deletion, with regard to the group information storage unit 11 as shown in FIG. 3 and FIG. 4. In a case where the switch 10 is an OpenFlow switch of Non-Patent Literature 1 or 2, a flow entry mode may be used, which instructs rewriting of a packet header in such OpenFlow switches.

Based on the instruction to replace the communication group information described above, the switch 10 performs interconversion (Tag replacing) of a communication group (equivalent to second communication group information) and a VID (equivalent to first communication group information) of a local NW 1000 corresponding to the relevant communication group (step S13).

As described above, according to the exemplary embodiments of the present invention, in addition to effects of the first and second exemplary embodiments, it is possible to flexibly give an instruction regarding replacing communication group information by a switch, in response to a network state or a request by a network user. For example, it is possible to replace the second communication group information that has been assigned, or to add additional QoS information, in response to traffic or packet status.

A description has been given above of respective exemplary embodiments of the present invention, but the present invention is not limited to the abovementioned exemplary embodiments, and further modifications, substitutions and adjustments may be added within a scope that does not depart from fundamental technical concepts of the invention. For example, network configurations, respective element configurations and message expression modes shown in the respective drawings are examples for the purpose of aiding understanding of the invention, and are not intended to limit the invention to configurations illustrated in the drawings.

It is to be noted that the respective parts (processing means) of the switch 10 and the control apparatus 20 shown in FIG. 2 and FIG. 25 can be implemented by a computer program that executes the abovementioned respective processing in a computer configuring these devices, using hardware thereof.

Finally, preferred modes of the present invention are summarized.

### [First Mode]

(Refer to the communication node according to the first aspect described above.)

### [Second Mode]

In the communication node according to the first mode, the second communication group information is preferably configured to be unique by including identification information for identifying a layer 2 network, and prescribed group identification information.

### [Third Mode]

In the communication node according to the first or second mode, the first communication group information is preferably configured by prescribed N bits, and the second communication group information configured by 2N bits.

### [Fourth Mode]

The communication node according to any one of the first to third modes is preferably connected to a second communication node that performs packet forwarding based on the second communication group information.

### [Fifth Mode]

The communication node according to the second mode, wherein it is preferable that when a packet is received from a terminal, the first communication group information is replaced by identification information (relay VLAN information) for identifying the layer 2 network; in a case where an output destination of the packet after replacement is an edge port connected to another terminal, identification information (relay VLAN information) for identifying the layer 2 network is rewritten to the first communication group information; and in a case where an output destination of the packet after replacement is a core port connected to a core network, the prescribed group identification information (group VLAN information) is added to the packet.

### [Sixth Mode]

The communication node according to the second mode, wherein it is preferable that when a packet is received from a core network side, prescribed group identification information (group VLAN information) is removed from the packet; in a case where an output destination of the packet after the removal is an edge port connected to a terminal, identification information (relay VLAN information) for identifying the layer 2 network is rewritten to the first communication group information; and in a case where an output destination of the packet after replacement is a core port connected to a core network, the prescribed group identification information (group VLAN information) is added to the packet.

### [Seventh Mode]

A control apparatus that gives notification of a correspondence relationship of the first and second communication group information, to the communication node described above.

### [Eighth Mode]

(Refer to the control apparatus according to the second aspect described above.)

### [Ninth Mode]

(Refer to the communication system according to the third aspect described above.)

### [Tenth, Eleventh Mode]

(Refer to the communication method according to the fourth and fifth aspects described above.)

### [Twelfth Mode]

A program that executes on a computer provided with a group information storage unit that stores correspondence relationships between first communication group information that identifies communication groups in a first network, and second communication group information that identifies communication groups in a second network that can accommodate a larger number of communication groups than the first network: the program executing a process of examining whether or not the first communication group information or the second communication group information is included in a received packet, and a process of referring to the group information, in a case where the first communication group information or the second communication group information is included in a received packet, to perform interconversion of the first communication group information and the second communication group information.

### [Thirteenth Mode]

A program that executes on a computer provided with a group information storage unit that stores correspondence relationships between first communication group information that identifies communication groups in a first network, and second communication group information that identifies communication groups in a second network that can accommodate a larger number of communication groups than the first network: the program executing a process of instructing interconversion of the first communication group information and the second communication group information of a received packet that includes the first communication group information or the second communication group information, with respect to a communication node to be controlled.

It is to be noted that the seventh to thirteenth modes described above may be expanded with regard to the second to sixth modes, similar to the first mode.

It is to be noted that the various disclosures of the abovementioned Patent Literature and Non-Patent Literature are incorporated herein by reference thereto. Modifications and adjustments of exemplary embodiments and examples may be made within the bounds of the entire disclosure (including the scope of the claims) of the present invention, and also based on fundamental technological concepts thereof. Various combinations and selections of various disclosed elements (including respective elements of the respective claims, respective elements of the respective exemplary embodiments and examples, respective elements of the respective drawings and the like) are possible within the scope of the disclosure of the present invention. That is, the present invention clearly includes every type of transformation and modification that a person skilled in the art can realize according to the entire disclosure including the scope of the claims and to technological concepts thereof. In particular, with regard to numerical ranges described in the present specification, arbitrary numerical values and small ranges included in the relevant ranges should be interpreted to be specifically described even where there is no particular description thereof.

### REFERENCE SIGNS LIST

- 1, 1A to IF, 1(a), 1(b), 1(c), 1(d): terminal
- 10, 10(A), 10(B), 10-1 to 10-5: switch
- 11: group information storage unit
- 12: packet processing unit
- 20: control apparatus
- 21: control unit
- 22: virtual NW management unit
- 23: communication interface
- 106, 108: communication group
- 107: broadcast/multicast path
- 120 to 145: packet, packet format
- 1000, 1000(A), 1000(B), 1011 to 1041: local network
- 105, 2000: relay network
- P1 to P3: packet

## Claims

1. A communication node comprising:
a group information storage unit that stores correspondence relationships between first communication group information that identifies communication groups in a first network, and second communication group information that identifies communication groups in a second network that can accommodate a larger number of communication groups than said first network; and
a packet processing unit that refers to said group information to convert between said first communication group information and said second communication group information included in received packet(s); wherein
communication is realized between terminals in which said first communication group information is different.

2. The communication node according to claim 1, wherein said second communication group information is configured to be unique by including identification information for identifying a layer 2 network and prescribed group identification information.

3. The communication node according to claim 1 or 2, wherein said first communication group information is configured by prescribed N bits, and said second communication group information is configured by 2N bits.

4. The communication node according to any one of claims 1 to 3, wherein said communication node is connected to a second communication node that performs packet forwarding based on said second communication group information.

5. The communication node according to claim 2, wherein
when a packet is received from a terminal, said first communication group information is replaced by identification information for identifying said layer 2 network,
in a case where an output destination of said packet after replacement is an edge port connected to another terminal, identification information for identifying said layer 2 network is rewritten to said first communication group information, and
in a case where an output destination of said packet after replacement is a core port connected to a core network, said prescribed group identification information is added to said packet.

6. The communication node according to claim 2, wherein
when a packet is received from a core network side, prescribed group identification information is removed from said packet,
in a case where an output destination of said packet after the removal is an edge port connected to a terminal, identification information for identifying said layer 2 network is rewritten to said first communication group information, and
in a case where an output destination of said packet after replacement is a core port connected to a core network, said prescribed group identification information is added to said packet.

7. A control apparatus that gives notification of a correspondence relationship of said first and second communication group information, to said communication node of any one of claims 1 to 6.

8. A control apparatus comprising:
a group information storage unit that stores correspondence relationships between first communication group information that identifies communication groups in a first network, and second communication group information that identifies communication groups in a second network that can accommodate a larger number of communication groups than said first network; and
a control unit that instructs interconversion of said first communication group information and said second communication group information included in received packet(s), with respect to a communication node to be controlled; wherein
communication is realized between terminals in which said first communication group information is different.

9. The control apparatus according to claim 8, wherein said second communication group information is configured to be unique by including identification information for identifying a layer 2 network and said group identification information.

10. The control apparatus according to claim 8 or 9, wherein said first communication group information is configured by prescribed N bits, and said second communication group information is configured by 2N bits.

11. The control apparatus according to any one of claims 8 to 10, wherein said control apparatus instructs packet forwarding based on said second communication group information, with respect to a second communication node.

12. A communication system comprising said communication node of any one of claims 1 to 6, and said control apparatus of claim 7.

13. A communication system comprising said control apparatus of any one of claims 8 to 11, and a communication node that performs interconversion of first communication group information and second communication group information included in received packet(s), in accordance with an instruction from said control apparatus.

14. A communication method, in a communication node comprising a group information storage unit that stores correspondence relationships between first communication group information that identifies communication groups in a first network, and second communication group information that identifies communication groups in a second network that can accommodate a larger number of communication groups than said first network, said method comprising:
a step of examining whether or not said first communication group information or said second communication group information is included in a received packet, and
a step of referring to said group information, in a case where said first communication group information or said second communication group information is included in the received packet, to perform interconversion of said first communication group information and said second communication group information,
the method realizing communication between terminals in which said first communication group information is different.

15. A communication method, in a control apparatus comprising a group information storage unit that stores correspondence relationships between first communication group information that identifies communication groups in a first network, and second communication group information that identifies communication groups in a second network that can accommodate a larger number of communication groups than said first network, said method comprising:
a step of instructing interconversion of said first communication group information and said second communication group information of a received packet that includes said first communication group information or said second communication group information, with respect to a communication node to be controlled,
the method realizing communication between terminals in which said first communication group information is different.

16. A program that executes on a computer comprising a group information storage unit that stores correspondence relationships between first communication group information that identifies communication groups in a first network, and second communication group information that identifies communication groups in a second network that can accommodate a larger number of communication groups than said first network, said program executing:
a process of examining whether or not said first communication group information or said second communication group information is included in a received packet, and
a process of referring to said group information, in a case where said first communication group information or said second communication group information is included in the received packet, to perform interconversion of said first communication group information and said second communication group information.

17. A program that executes on a computer comprising a group information storage unit that stores correspondence relationships between first communication group information that identifies communication groups in a first network, and second communication group information that identifies communication groups in a second network that can accommodate a larger number of communication groups than said first network, said program executing:
a process of instructing interconversion of said first communication group information and said second communication group information of a received packet that includes said first communication group information or said second communication group information, with respect to a communication node to be controlled.
